# DEMANDE DE BREVET EUROPEEN

(11) **EP 1 081 009 A1**
(43) Date de publication de la demande: **07.03.2001**
(21) Numéro de dépôt: 00402103.6
(22) Date de dépôt: 21.07.2000
(51) Int. Cl.: B61B 12/00

(54) **Dispositif de guidage de cable amortissant les vibrations**

(30) Priorité: 01.09.1999 FR 9910979
(71) Demandeur: POMAGALSKI S.A., 38600 Fontaine (FR)
(72) Inventeur: Huard, Jean Paul, 74410 Saint Jorioz (FR)
(74) Mandataire: Keib, Gérard

(57) **Abrégé**

Dispositif de guidage d'un câble comprenant au moins un galet (3) pour guider le câble (12), monté tournant sur un axe (4) fixe qui est rendu solidaire d'une structure porteuse (2), caractérisé en ce que la structure porteuse (2) comprend un corps creux (5) traversé par l'axe du galet, l'intérieur de ce corps creux (5) comprenant un insert (8) réalisé dans un matériau rigide, l'espace séparant la surface extérieure de cet insert et la surface intérieure du corps creux étant rempli d'une matière souple et élastique, apte à absorber les vibrations auxquelles est soumis l'axe lors de la rotation du galet.

## Description

L'invention concerne un dispositif de guidage de câble, notamment d'un câble de télécabine, télésiège, ou analogue.

Elle concerne plus particulièrement un dispositif de guidage du câble comprenant une structure porteuse conçue de manière à amortir les vibrations de la structure générées lors du passage du câble sur le galet.

Dans les stations d'embarquement et de débarquement de télésièges, télécabines, ou analogues, débrayables, le câble est dévié verticalement et horizontalement pour satisfaire aux besoins de la cinématique de débrayage des pinces de préhension du câble et de raccordement du câble sur une poulie.

Cette déviation du câble est réalisée par des galets de guidage.

Les galets de guidage utilisés sont équipés d'un bandage souple amortissant le contact entre le câble et le galet. Ils sont montés à rotation sur des axes fixés sur les structures porteuses.

Toutefois, du fait du montage rigide de l'axe sur la structure, la structure est soumise aux vibrations générées par le défilement du câble, et le positionnement des galets est dépendant des tolérances de construction de la structure porteuse.

La présente invention vise à palier à ces problèmes en proposant un montage des galets de guidage du câble avec une fixation sur les structures fixes qui ne soit pas rigide, ni sollicitée par le défilement du câble.

Un tel montage permet de dimensionner la structure fixe afin d'amortir les vibrations et les bruits en résultant.

Ainsi, le montage selon l'invention permet :
- de réduire considérablement le bruit occasionné par le passage du câble sur le galet ;
- de réduire les vibrations de la structure porteuse dans les mêmes circonstances ;
- un réglage simple de la position des galets, indépendamment des tolérances de construction de la structure porteuse :
- d'adapter différents types et agencements de galets à une même structure porteuse.

Un tel montage permet une adaptation rapide aux besoins spécifiques liés aux différents véhicules.

A cet effet, et selon un premier aspect, l'invention a pour objet un dispositif de guidage d'un câble comprenant au moins un galet pour guider le câble, le galet étant monté tournant sur un axe fixe qui est rendu solidaire d'une structure porteuse.

Suivant l'invention, la structure porteuse comprend un corps creux traversé par l'axe du galet, l'intérieur de ce corps creux comprenant un insert réalisé dans un matériau rigide, l'espace séparant la surface extérieure de cet insert et la surface intérieure du corps creux étant rempli d'une matière souple et élastique apte à absorber les vibrations auxquelles est soumis l'axe lors de la rotation du galet.

Dans un premier mode de réalisation de l'invention, l'insert de la structure porteuse est en métal ou en béton.

La matière souple et élastique est alors coulée en place dans l'espace libre, entre le corps creux et l'insert. après introduction par coulissement de l'insert dans la structure porteuse.

Dans un second mode de réalisation selon l'invention, l'insert de la structure porteuse est en béton.

Dans ce cas, l'insert est coulé en place dans la cavité de la structure porteuse, entre l'enveloppe de matière souple et élastique prémontée et l'axe fixe du galet.

Le diamètre de l'alésage du corps creux, destiné au passage de l'axe du galet, est supérieur au diamètre dudit axe. Un jeu est ainsi formé entre l'axe et la structure porteuse.

De cette manière, les vibrations transmises par l'axe à la structure porteuse sont amorties par l'insert et l'enveloppe de matière souple, en contact direct avec l'axe.

Selon un second aspect, l'invention concerne une installation de convoyage par câble comprenant au moins un dispositif de guidage tel que décrit précédemment.

D'autres caractéristiques et avantages de l'invention apparaîtront encore dans la description ci-après.

Aux dessins annexés donnés à titre d'exemples non limitatifs :
- la figure 1 représente une vue en coupe transversale d'un dispositif de guidage selon un premier mode de réalisation de l'invention ;
- la figure 2 représente une vue en coupe transversale d'un dispositif de guidage selon un second mode de réalisation de l'invention ;
- la figure 3 représente une vue en perspective du dispositif de guidage suivant le mode de réalisation de la figure 1.

Le dispositif de guidage 1 comprend une structure porteuse 2 et au moins un galet 3.

Le galet 3 est monté à rotation sur un axe 4 fixé à la structure porteuse 2.

La structure porteuse 2 comprend une enveloppe tubulaire rigide et creuse 5.

Dans le mode de réalisation représenté sur les figures, la section de l'enveloppe tubulaire est sensiblement rectangulaire.

Des alésages 6 sont prévus sur les faces latérales verticales opposées de la structure porteuse 2.

L'axe 4 traverse la structure 2 en passant par les alésages 6 opposés, placés en regard les uns des autres.

Le diamètre de chaque alésage 6 est légèrement supérieur au diamètre de l'axe 4.

Il existe ainsi un jeu entre l'axe et l'enveloppe 5 de la structure, permettant un certain débattement entre les deux pièces.

A l'intérieur de l'enveloppe rigide 5, et en contact direct avec la paroi interne de celle-ci, se trouve une enveloppe 7 tubulaire en une matière souple et élastique.

La surface externe de l'enveloppe 7 est sensiblement complémentaire de la surface interne de l'enveloppe 5 de la structure.

Cette enveloppe 7 est sensiblement de même épaisseur que l'enveloppe 5.

Dans d'autres variantes, non représentées, l'enveloppe 7 peut être d'épaisseur plus élevée, ou plus faible.

L'espace libre présent à l'intérieur de la structure porteuse 2, munie de l'enveloppe 7 en matière souple et élastique, est entièrement occupé par un insert 8.

L'insert 8 est en matériau rigide, tel que du béton ou du métal. Dans les modes de réalisation représentés, l'insert présente une forme parallélépipédique sensiblement complémentaire de la forme interne de l'enveloppe 7.

La matière souple et élastique constituant l'enveloppe 7 est une matière plastique apte à amortir les vibrations, telle que, par exemple, un élastomère ou une mousse.

Des ouvertures 9, généralement coniques, sont prévues sur la surface supérieure de la structure porteuse 2. Elles sont destinées à l'introduction de la matière souple et élastique de l'enveloppe 7 ou à l'introduction du béton de l'insert 8.

L'axe 4 est fixé et rendu solidaire de l'insert par divers moyens de serrage non représentés sur les figures.

Ces moyens de serrage sont, par exemple, des vis de pression, des épaulements, des cônes, et analogues.

Le galet 3 présente sur sa périphérie une gorge 10 destinée à recevoir un bandage souple 11.

Le câble 12 repose sur une gorge 13 du bandage souple.

Ce dernier permet ainsi de répartir le contact entre le câble et le galet, et d'amortir le contact.

Le galet 3 est monté à rotation sur l'axe 4 par exemple par des roulements à billes 14.

D'autres types de galets que celui représenté sur les figures, ou des ensembles de galets, peuvent être montés sur l'axe 4.

Le dispositif de guidage peut comporter une pluralité de galets répartis le long de la structure porteuse.

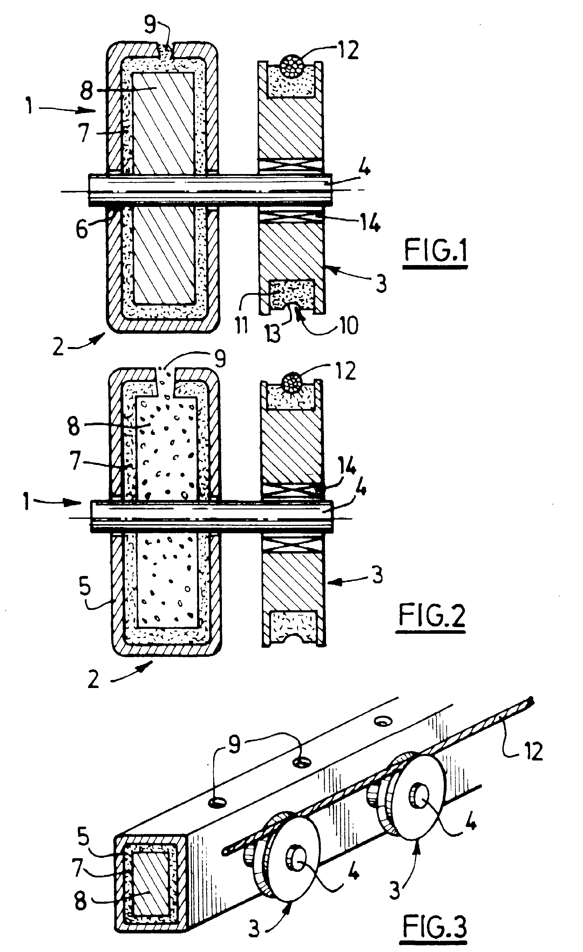

Dans un premier mode de réalisation, représenté sur la figure 1, l'insert 8 en métal ou en un autre matériau rigide tel que du béton, est introduit par coulissement à l'intérieur de l'enveloppe 5 préalablement mise en place.

L'insert 8 présente alors sur des alésages le traversant dans son épaisseur, permettant le passage de l'axe 4, correspondant aux alésages 6 de l'enveloppe 5.

Les axes 4 sont alors introduits dans les alésages de l'enveloppe 5 et de l'insert 8 prémonté.

La fixation de l'axe par rapport à l'insert est réalisée au moyen d'un montage serré.

La matière souple et élastique est alors introduite par les orifices 9, traversant l'épaisseur de l'enveloppe 5, dans l'espace libre entre l'insert 8, l'enveloppe 5 et l'axe 4.

Le jeu existant entre l'enveloppe 5 et l'axe 4 est provisoirement obturé le temps de l'injection du produit.

Dans un second mode de réalisation, représenté sur la figure 2, l'enveloppe 7 de matière souple et élastique est introduite par coulissement à l'intérieur de l'enveloppe 5 préalablement mise en place.

Cette enveloppe 7 de matière souple et élastique comprend des alésages destinés au passage des axes 4, placés en regard des alésages correspondant de l'enveloppe 5.

Après introduction et fixation de(s) l'axe(s), tel que décrit ci-dessus, le béton est introduit par les orifices 9 à l'intérieur de la cavité restante dans la structure porteuse.

Dans ce mode de réalisation, les orifices 9 traversent les épaisseurs des enveloppes 7 et 5 de la structure porteuse.

Après rigidification du béton, le cône de béton restant présent au niveau des orifices 9 est brisé et retiré, afin d'éliminer tout lien entre l'insert et la structure porteuse ainsi que l'enveloppe de matière souple.

Après la mise en place des différents éléments de la structure porteuse et de l'axe 4, chaque galet 3 est introduit sur un axe 4. Un gabarit est alors utilisé pour positionner l'axe par rapport à une référence externe au dispositif de guidage.

L'invention se rapporte également à une installation de convoyage comprenant au moins un dispositif de guidage selon l'invention, la structure porteuse comportant au moins un galet ou une pluralité de galets.

## Revendications

1. Dispositif de guidage d'un câble comprenant au moins un galet (3) pour guider le câble (12), monté tournant sur un axe fixe (4) qui est rendu solidaire d'une structure porteuse (2), caractérisé en ce que la structure porteuse comprend un corps creux (5) traversé par l'axe du galet, l'intérieur de ce corps creux comprenant un insert (8) réalisé dans un matériau rigide, l'espace séparant la surface extérieure de cet insert et la surface intérieure du corps creux étant rempli d'une matière souple et élastique, apte à absorber les vibrations auxquelles est soumis l'axe lors de la rotation du galet.

2. Dispositif de guidage selon la revendication 1, caractérisé en ce que l'insert (8) est en métal ou en béton.

3. Dispositif de guidage selon la revendication 1, caractérisé en ce que l'insert (8) est en béton.

4. Dispositif de guidage selon la revendication 2, caractérisé en ce que la matière souple et élastique est coulée en place dans l'espace libre entre le corps creux (5) et l'insert (8), après introduction par coulissement dudit insert dans la structure porteuse.

5. Dispositif de guidage selon la revendication 3, caractérisé en ce que l'insert (8) est coulé en place dans la cavité de la structure porteuse (2), entre l'enveloppe (7) de matière souple et élastique prémontée et l'axe (4) du galet.

6. Dispositif de guidage selon l'une quelconque des revendications 1 à 5, caractérisé en ce que le diamètre de l'alésage (6) du corps creux, destiné au passage de l'axe (4) du galet, est supérieur au diamètre dudit axe, formant ainsi un jeu entre l'axe et le corps creux.

7. Dispositif de guidage selon l'une quelconque des revendications 1 à 6, caractérisé en ce que la structure porteuse (2) présente une forme tubulaire creuse.

8. Dispositif de guidage selon la revendication 7, caractérisé en ce que la structure porteuse (2) présente une section de forme sensiblement rectangulaire.

9. Dispositif de guidage selon l'une quelconque des revendications 1 à 8, caractérisé en ce que la structure porteuse (2) comporte des orifices (9) destinés à l'introduction du béton de l'insert ou de la matière souple et élastique.

10. Installation de convoyage par câble comprenant au moins un dispositif de guidage selon l'une quelconque des revendications 1 à 9.
